# EUROPEAN PATENT SPECIFICATION

(11) **EP 2 668 475 B1**
(45) Date of publication and mention of the grant of the patent: **24.08.2022**
(21) Application number: 11701394.6
(22) Date of filing: 24.01.2011
(51) Int. Cl.: G01F 23/284

(54) **PHASE-BASED TRACKING**
PHASENBASIERTE VERFOLGUNG
REPÉRAGE BASÉ SUR LA PHASE

(43) Date of publication of application: 04.12.2013
(73) Proprietor: VEGA Grieshaber KG, 77709 Wolfach (DE)
(72) Inventor: WELLE, Roland, 77756 Hausach (DE); HOFERER, Christian, 77654 Offenburg (DE)
(74) Representative: Maiwald Patent- und Rechtsanwaltsgesellschaft mbH
(86) International application number: PCT/EP2011/050903
(87) International publication number: WO 2012/100814

(56) References cited:
- EP-A2- 2 071 302
- US-A1- 2001 050 629
- US-A1- 2010 262 009

## Description

### Field of the invention

The invention relates to the field of filling level determination. In particular, the invention relates to a filling level measuring device for measuring a filling level, to a method of measuring a filling level, to a program element and to a computer-readable medium.

### Technological background of the invention

Echo tracking methods are used for military applications and for civil airspace control, as well as for automotive applications. The allocation of an echo to the correct track is often based on the echo position, the echo width, the echo amplitude, the echo form and the echo velocity.

However, known allocation methods are not always reliable.

DE 10 2006 006 572 A1 describes a paired intermediate frequency sampling for pulse running time filling level sensors. Furthermore, a method for determining the phase of an echo is described.

WO 2009/037000 A2 describes a method for echo extraction.

EP 2 071 302 A2 describes a method for determination of a filling level of a product contained in a tank, comprising the steps of generating and transmitting an electromagnetic signal.

US 2010/262009 A1 describes an ultrasonic pulse echo apparatus for detecting an object that is moving with respect to stationary objects.

### Summary of the invention

It may be desirable to have a simple and reliable allocation of an echo to a corresponding track in the field of filling level determination.

According to aspects of the invention, a filling level measuring device for measuring a filling level of a fill medium in a container, a corresponding measuring method, a program element and a computer-readable medium are provided according to the independent claims. Further embodiments are evident from the dependent claims and the following description. The invention is defined in the appended independent claims.

It should be noted that features, which are in the following described with respect to the filling level measuring device may also be implemented as corresponding method steps and that features, which are in the following described with respect to the method may also be implemented in the filling level measuring device.

According to a first aspect of the invention a filling level measuring device for measuring a fill level, for example of a fill medium inside a container, is provided, wherein the device comprises a signal generation unit and a signal acquisition and processing unit.

The signal generation unit is designed for generating and transmitting a transmission signal towards the fill medium and the signal acquisition and processing unit is designed for acquisition of an echo curve corresponding to a reflected part of the transmission signal. Furthermore, the signal acquisition and processing unit is designed to identify at least one echo of the echo curve, to determine a relative sign of an amplitude value of the echo in relation to a corresponding relative amplitude value of the transmission signal and/or to determine a relative phase of the echo in relation to a corresponding phase of the transmission signal, and to allocate the echo to a first echo track which is related to previous echoes of previously acquired echo curves, if an amplitude value of a first echo of the previous echoes of the first echo track has the same sign as the amplitude value of the echo of the echo curve and/or if a relative phase value of the first echo is identical to the relative phase value of the echo.

Furthermore, the allocation of the echo to the first echo track is prevented, if the amplitude value of the first echo of the previous echoes of the first echo track has a different sign as the amplitude value of the echo, or if the relative phase value of the first echo is not identical to the relative phase value of the echo.

The evaluation of the measured echo data may be optimized based on the determined relative sign and/or the determined relative phase of the echo (in the following also referred to as "polarity") of an echo curve. This evaluation of the history of the previously acquired echo data may also be called tracking.

The term "tracking" relates to a tracing method which traces moving objects or at least their echoes, as it is the case here. A track which is classified as the track of a positive echo, i.e. an echo which has a positive relative sign or a positive relative phase (i.e. a positive polarity), can not be allocated to an echo which has a negative relative sign or a negative relative amplitude.

According to an exemplary embodiment of the invention, the determination of the sign of the amplitude value of the echo comprises a comparison of the mean amplitude of the echo with a predefined reference value.

For determination of the mean amplitude of the echo, the amplitude values of the echo may be integrated over time and then, for example divided by the width of the time interval over which the echo curve has been integrated.

If the determined mean amplitude of the echo is, for example, larger than the predetermined reference value, the relative sign of the amplitude value is considered to be positive, wherein, if the determined mean amplitude of the echo is below predefined reference value, the relative sign of the amplitude is considered to be negative.

According to another exemplary embodiment of the invention, determining the relative sign of the amplitude value of the echo comprises comparing the echo with a predefined reference curve.

If, for example, the whole echo or at least a considerable part of the echo lies above the predefined reference curve, relative sign of the echo is determined as positive, and vice versa.

According to another exemplary embodiment of the invention, determining the relative phase of the echo comprises applying a correlation calculation and/or a trigonometric calculation.

Calculation of the relative phase based on a trigonometric calculation is described in DE 10 2006 006 572.

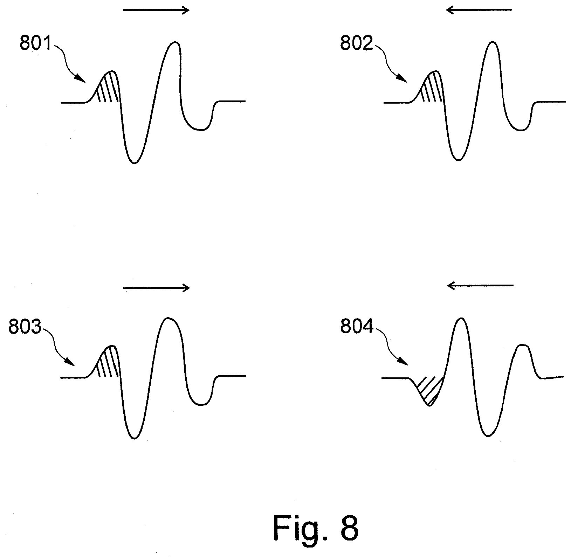

By applying the correlation calculation two signals can be compared with each other. For example, a correlation factor of the transmission pulse and the corresponding echo can be calculated and used for quantifying the similarity of the two signals. If the received echo has the same relative phase as the transmission pulse (see 801, 802 in Fig. 8), both signals are more similar than they would be if the relative phases would be different (see 803, 804 in Fig. 8). This similarity is represented by the correlation factor. Thus, by comparing the correlation factor with a threshold value it may be determined whether the echo has the same relative phase or an inverted relative phase as the original transmission pulse.

According to another exemplary embodiment of the invention, the reference curve is represented by a constant value or may be acquired by filtering a previously or currently acquired echo curve.

According to another exemplary embodiment of the invention, the signal acquisition and processing unit is further designed to allocate the echo to a different, second track if the amplitude value of the first echo of the previous echoes of the first echo track has a different sign as the relative amplitude value of the echo, or if the relative phase value of the first echo is not identical to the relative phase value of the echo.

According to another exemplary embodiment of the invention, the filling level measuring device is a filling level radar or an ultrasound filling level measuring. Furthermore, it may be adapted for using guided microwaves for measuring the filling level.

According to a further aspect of the invention, a method for measuring a fill level of a fill medium is provided, in which a transmission signal is generated and transmitted towards the fill medium, an echo curve corresponding to a reflected part of the transmission signal is acquired, at least one echo of the echo curve is identified, a sign of an amplitude value of the echo is determined in relation to a corresponding amplitude value of the transmission signal or a relative phase of the echo is determined in relation to a corresponding phase of the transmission signal. Furthermore, the echo is allocated to a first echo track which is related to previous echoes of previously acquired echo curves, if an amplitude value of a first echo of the previous echoes of the first echo track has the same sign as the amplitude value of the echo of the echo curve.

According to another aspect of the invention, a program element is provided, which, when being executed on a processor of a filling level measuring device instructs the device to carry out the above and below mentioned method steps.

According to another aspect of the invention, a computer-readable medium is provided, which comprises a computer program, which, when being executed on a processor of a filling level measurement device instructs the device to carry out the above and below mentioned method steps.

Below, exemplary embodiments of the invention are described with reference to the figures.

### Brief description of the figures

Fig. 1 shows a principle approach in echo signal processing.
Fig. 2 shows a filling level measuring device according to an exemplary embodiment of the invention.
Fig. 3 shows an echo list.
Fig. 4 shows three echo curves, acquired at three different times, and corresponding echo tracks.
Fig. 5 shows two tracks within a track list.
Fig. 6 shows an echo curve and a reference curve in case of guided microwaves.
Fig. 7 shows a flow-chart according to an exemplary embodiment of the invention.
Fig. 8 shows transmission and receiving signals in case of non-guided, contactless measurements.
Fig. 9 shows an echo list according to an exemplary embodiment of the invention.
Fig. 10 shows a plausibility test according to an exemplary embodiment of the present invention.

### Detailed description of exemplary embodiments

The illustrations in the drawings are diagrammatic and not to scale.

In the following description of the figures the same reference characters are used for identical or similar elements.

The present invention generally relates to methods and devices for measuring all kinds of filling levels. In filling level sensors that operate according to the FMCW method or the pulse transit-time method, electromagnetic or acoustic waves are emitted in the direction of a filling level surface. Subsequently, the sensor records the echo signals reflected by the feed material and the container internals, and from them derives the respective filling level.

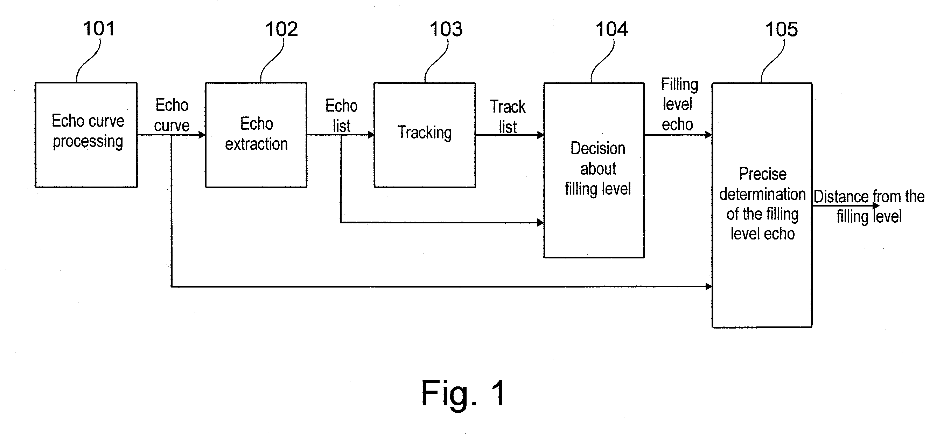

Fig. 1 shows the basic flow of echo signal processing within a commercial filling level measuring device.

The block "Echo curve processing" 101 comprises all the hardware units and software units that are required to provide an echo curve as an image of the current reflection conditions within a container. The echo curve is preferably acquired in digital form within a microprocessor system and is investigated, with the use of known methods, for any echoes contained therein.

The methods applied for this purpose within the block "Echo extraction" 102 comprise, in particular, methods from the field of threshold-value-based echo extraction or methods based on scale-based echo extraction. After processing the echo extraction method a digital echo list is provided which preferably comprises details relating to the start, location and end of one or several echoes contained in the echo curve.

In order to further increase the reliability of echo signal processing of a filling level measuring device, the found echoes are placed within a historic context within the block "Tracking" 103. The methods used in this process may be derived from the current state of the art. For example, methods based on the Munkres algorithm may be used to advantage. Within tracking, in particular, the progress of the location of an echo is tracked over several individual readings, and this collected information is represented in the storage device in the form of a track. The collected history information of several echoes is made available externally in the form of a track list.

In the block "Decision about filling level" 104 the data of the current echo list and the information relating to the chronological progress of individual echoes are balanced in order to make it possible, according to known methods, to indentify the echo pertaining to the filling level.

In order to further improve the accuracy of filling level measuring, the position of the determined filling level echo may be determined with great accuracy by means of the optional block "Precise measuring of the filling level echo" 105 with the use of computing-time-intensive methods, for example interpolation methods. The determined distance from the feed material is made available externally. This provision can be implemented in analogue form (e.g. by way of a 4..20 mA interface) or in digital form (e.g. by way of a field bus).

Advantages of the present invention may result from the special boundary conditions to which echo signal processing is subjected within a commercial filling level measuring device.

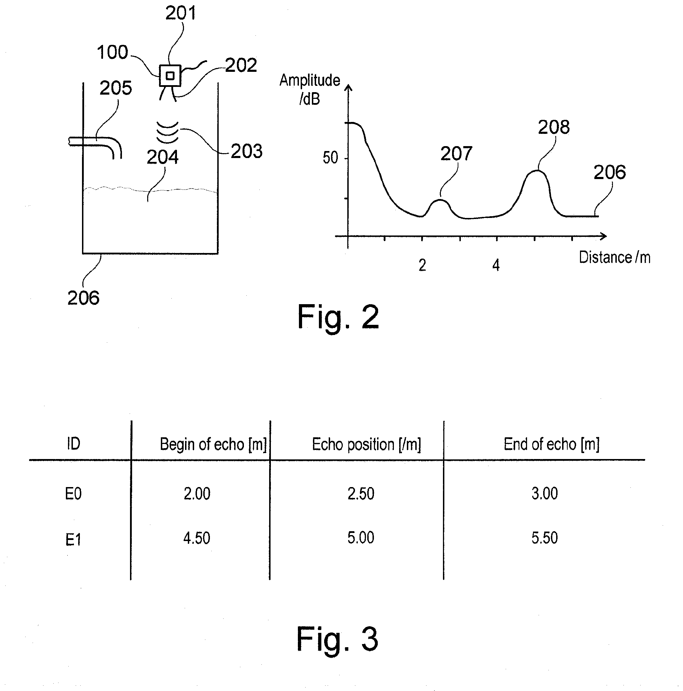

Fig. 2 shows a typical application of a filling level measuring device 201 with an electronics module 100 according to an exemplary embodiment of the invention.

By way of the antenna 202 the filling-level measuring device 201 radiates a signal 203 in the direction of the medium 204 to be measured. The filling-level measuring device itself can determine the distance from the medium according to the ultrasound principle, the radar principle, the laser principle, or the principle of the guided microwave.

Accordingly, both ultrasonic waves and electromagnetic waves may be considered as signals. The medium 204 reflects the impinging wave back to the measuring device where said wave is received and processed. At the same time the radiated signal is also reflected by container internals, for example by a supply pipe 205. The echo curve 206 received in the filling-level measuring device 201 can thus contain not only the useful echo 208 caused by the filling level, but also echoes caused by inbuilt fixed interference positions 207, which echoes are hereinafter referred to as spurious echoes or false echoes.

Within the then starting signal processing procedure, the echo curve is specifically investigated for echoes 102.

As a result of echo extraction, an echo list according to the diagram of Fig. 3 is generated. Apart from the characteristic values of the spurious echo 207 (E0) generated by the supply pipe, the echo list also contains the filling level echo 208 (E1) generated by the medium 204.

Of course, the presented characteristics of the echo list merely represent special implementation of an echo list. In practical application echo lists with further characteristics or changed characteristics of an echo are also commonly used.

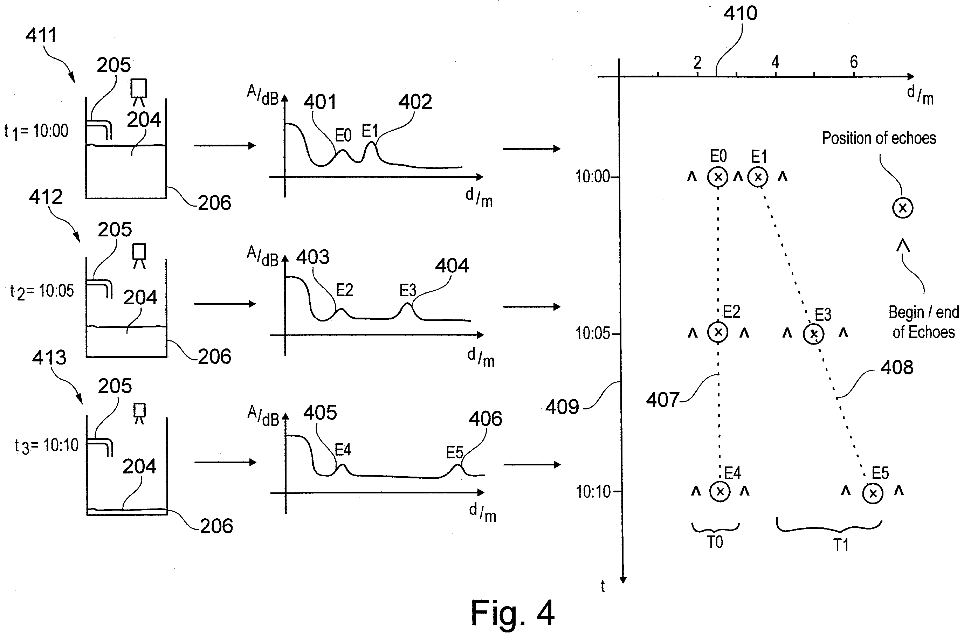

If cyclical measuring cycles are implemented in a filling-level measuring device, then this results in a sequence of received echo curves as shown in Fig. 4. As an example three independent measuring cycles 411, 412, 413, in each case spaced apart by five minutes, are shown. Of course, significantly faster measuring cycles, for example spaced apart by one second, may be implemented instead.

The scenario described shows the conditions during the emptying of a container 206. In order to keep track of the progress of the individual echoes over several such measuring cycles, specialised algorithms are used, which are known by the term "tracking". In the present example the progress of the echoes 401 (E0), 403 (E2) and 405 (E4), which are caused by the interference position 205, are described by means of a common track 407 (T0). Accordingly, the progress of the echoes 402 (E1), 404 (E3) and 406 (E5), which are generated by the medium 204, is represented by a common track 408 (Tl). The presentation, in the form of a track, the progress of echoes that are caused by a common reflection position is described in the literature and is used to advantage also in other fields, for example in air surveillance.

The vertical axis 410 represents the distance from the feed material surface or from the interference position in metres, while the longitudinal axis 409 represents the time at which the respective measuring cycle takes place.

On completion of tracking 103 the found tracks are provided in the form of a track list.

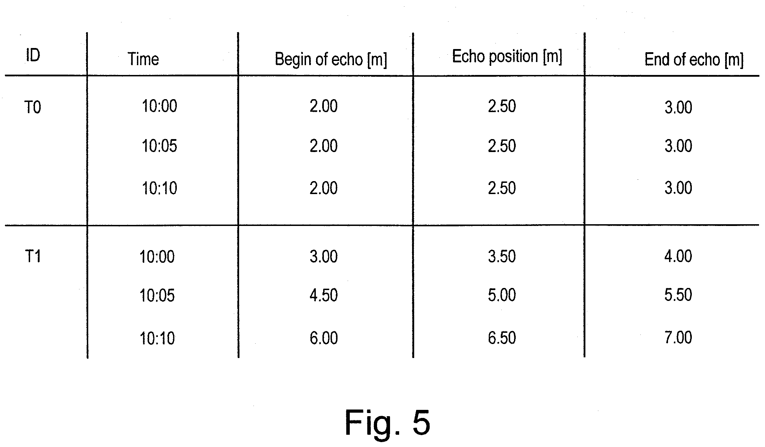

Fig. 5 shows in an exemplary manner a track list as would result from the above-mentioned sequence of echo curves. It should again be pointed out that the presented parameters of the track list represent an advantageous selection of possible characteristics of the underlying echoes. Of course, it is also possible to track additional or changed characteristics within such a track list.

With respect to the tracking problems may arise when echoes from an echo list have to be allocated to present tracks of a corresponding track list. With known methods, the allocation may be erroneous.

As already stated above it may be seen as an object of the invention to provide an allocation of an echo to a track of a track list in a simple manner in order to prevent erroneous allocations. Thus, the reliability of the echo allocation may be increased.

Many tracking methods relate to the tracking of moving objects. For example, the route of an aircraft or a vehicle may thus be retraced. The allocation of an echo to an object, if a plurality of echoes and/or objects are present, is based on the determination of characteristics which can be derived from the echo. For example, such characteristics may be the echo position, the velocity of the echo, the echo amplitude, a Doppler shift and the width of the echo.

According to an aspect of the present invention, in case of a transit time-based filling level measuring device a further echo characteristics may be taken into consideration for allocating an echo to a respective track.

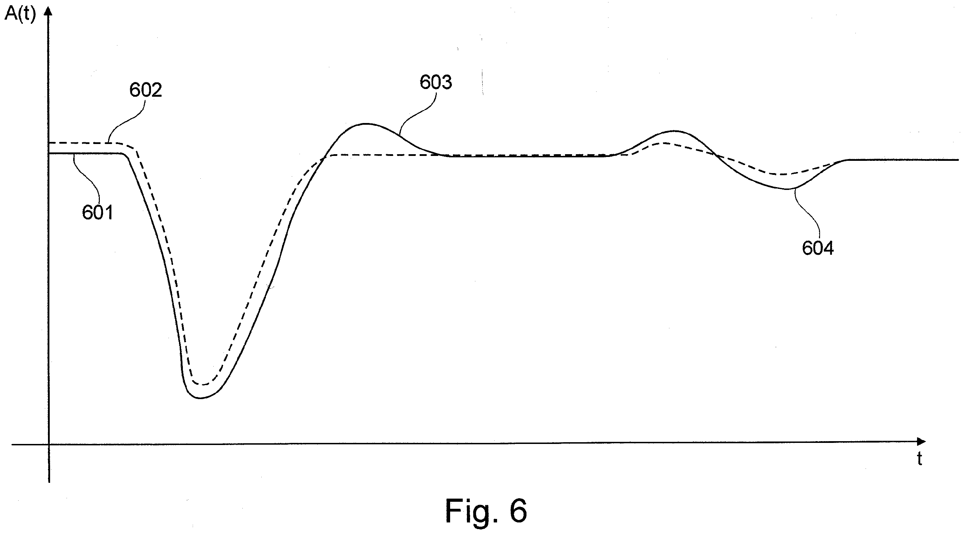

Fig. 6 shows an echo curve and a reference curve in case of a filling level measurement performed with guided microwave signals. The echo curve 601, which has been acquired by such a filling level measuring device, may comprise bumps 603, 604, which are directed upwards or downwards. A reason for these bumps are leaps or steps in the impedance of the measuring device or the measuring environment, which may arise at the transit regions between two different media having different densities or dielectric constants. For example, when an electromagnetic signal is travelling from a region of big impedance to a region of smaller impedance (such as a short circuit), a reflection with opposite phase than the transmit signal may result. In case of a transition from a smaller impedance to a bigger impedance the reflection, however, has the same phase.

Fig. 8 shows how the phase or amplitude of a transmission signal can be changed. The first signal 801 and the second signal 803 represent transmission signals. The signals 802 and 804 travel in the opposite direction and are signals resulting from reflections of the transmission signals 801, 803, respectively. Signal 802 has the same phase as the transmission signal 801, wherein the reflection signal 804 shows a phase leap by 180°. Consequently, the relative phase between the transmission and the receiving signal may be used for determining, which kinds of impedance leaps are present on the signal transmission path.

For example, Fig. 6 shows a typical form of an echo curve in case of guided microwave signals. Furthermore, a defined reference curve (a so-called zero line) 602 is shown, which enables the filling level measuring device to determine whether a positive echo (such as bump 603) or a negative echo (such as bump 604) is present. Furthermore, the zero line 602 enables the device to determine the sign of the phase of a corresponding echo.

The zero line 602 may have different forms. For example, it may have the form of a straight line, representing a constant amplitude value, or a form which approximates an echo curve, for example a currently measured echo curve.

The straight line may for example be derived based on a stochastic analysis, for example by determining a mean value of the amplitude. An approximating curve may be derived by estimation, interpolation and/or filtering. The zero line defines a threshold, based on which it can be determined whether a positive echo or bump or a negative echo or bump is present. More specifically, if the echo or bump lies above (either completely or at least considerably) above the zero line, the echo or bump is classified as positive and vice versa.

Furthermore, the phase of the reflected signals from contactless filling level measuring devices, such as filling level radars, may be determined, as shown in Fig. 8. For determining the phase of the reflected echo signal correlation methods between the transmission pulse and the receiving pulse, trigonometric methods using amplitude sample values or other methods may be used. DE 10 2006 006 572 A1, which is hereby incorporated by reference, discloses a method for determining a phase of an echo.

The determined relative sign of the amplitude value of the echo and/or the relative phase of the echo may be used in connection with the tracking algorithm. For example, this information may be added to the tracks depicted in Fig. 5.

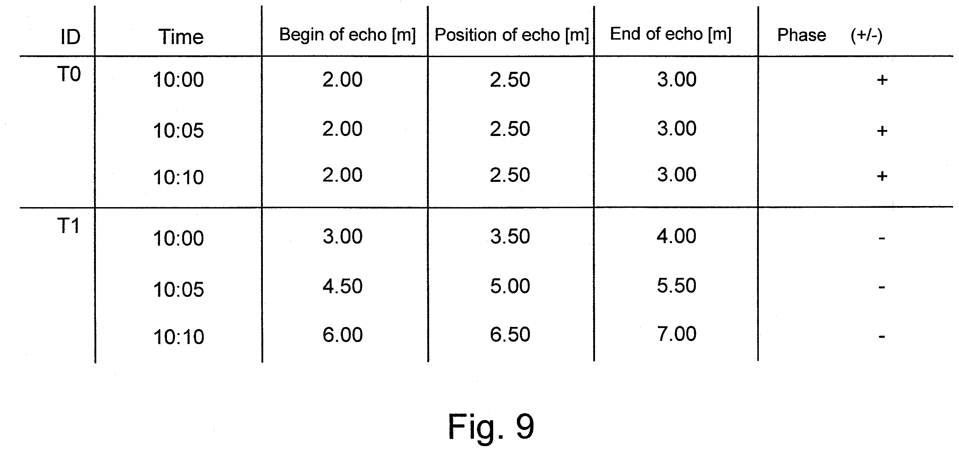

This can be seen in Fig. 9, which shows two echo tracks and additional relative amplitude sign or relative phase information, thereby characterizing, whether the respective echo has a positive or a negative "sign" (plus or minus).

Track T0 is a track which echoes have a positive sign (i.e. a positive relative phase or a positive relative amplitude value) and therefore, only echoes with such a positive sign may be added to this track. On the other hand, track T1 is a track which comprises only echoes with negative sign and consequently only echoes with such a negative sign may be added to that track.

According to an aspect of the invention, allocation of an echo with a negative sign to track T0 and allocation of an echo with a negative sign to track T1 are prevented.

Alternatively, after an echo has been allocated to a respective track, this allocation may be verified and undone, if the newly added echo has another sign than the echoes already present in the corresponding track.

It is further possible that two echo lists and two track lists or one echo list and two track lists are present, which include echoes or tracks with identical signs. A conventional tracking may be performed twice, wherein during the first tracking only echoes and track lists with negative sign are considered and wherein during the second tracking only echoes and track lists with positive sign are considered.

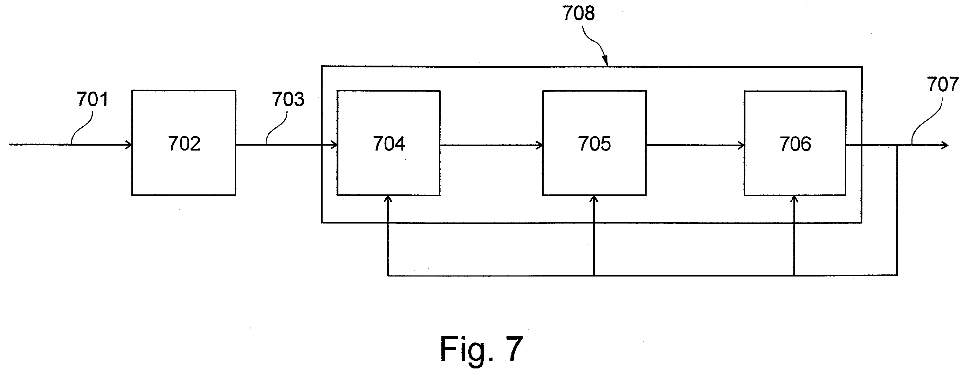

Fig. 7 shows a flow-chart of a tracking according to an exemplary embodiment of the invention. Starting with an echo curve 701, an echo extraction 702 results in an echo list 703. WO 2009/037000 A2, which is hereby incorporated by reference, describes methods for echo extraction. The echo extraction according to the invention determines, beside the beginning of the echo, the echo position and the end of the echo, the relative sign of an amplitude value of the echo in relation to a corresponding relative amplitude value of the transmission signal and/or a relative phase of the echo in relation to a corresponding phase of the transmission signal of single echoes.

Allocation of echoes to a respective track may be performed with the help of a cost matrix, which comprises allocation costs or allocation probabilities.

It should be noted that an allocation of an echo i to a track j is represented by the element i, j of the cost matrix.

The whole tracking algorithm 708 may be divided into three functional blocks. Functional block 704 carries out a plausibility test. The tracks of the track list 707 are, together with the echoes of the echo list, analyzed with respect to their signs.

Invalid allocations (because the signs are different) are noted in the cost matrix as being invalid. Functional block 705 calculates the absolute costs of the remaining possible allocations. In order to do so, changes in echo position and/or amplitude are considered, for example. It should be noted that block 705 may also be executed before block 704.

If the cost matrix is complete, the correct allocation of each echo to a corresponding echo track may be determined in functional block 706. For doing so, the so-called Munkres algorithm may be used.

As a result, a complete track list 707 is created.

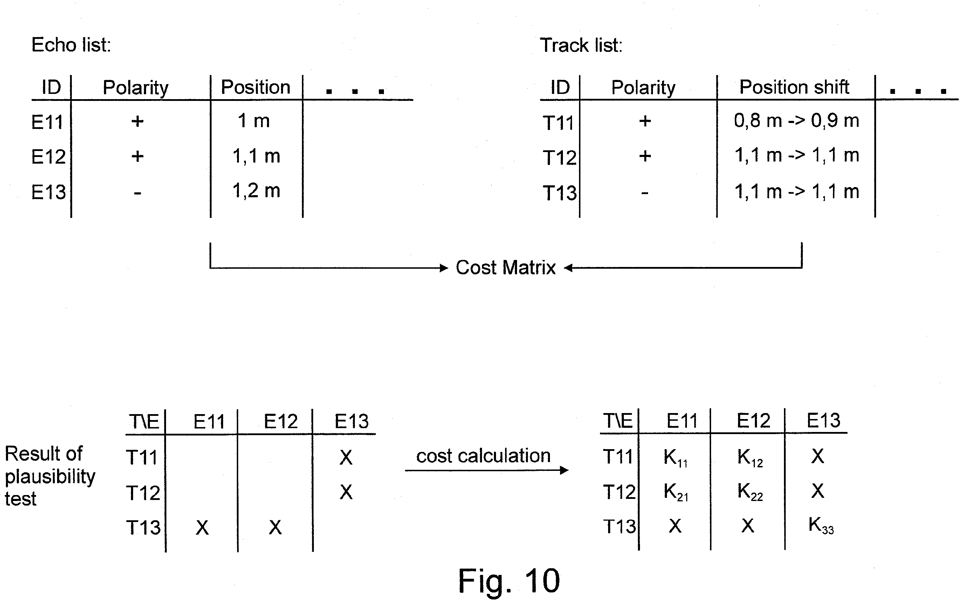

Fig. 10 shows a more detailed illustration of the plausibility test. Both the track list as well as the echo list comprise a column representing the relative sign/relative phase, i.e. the polarity, of each echo or each track, respectively.

The plausibility test can now be performed with the help of the track list and the echo list. For example, echo number 13 can not be allocated to tracks 11 or 12. Furthermore, track 13 can not be allocated to echoes 11 or 12, since track and echo have different polarities (signs/phases).

If an echo can not be allocated to a respective track, this is represented by an x or, for example, a relatively high value, for example 5000.

Then, determination of the costs K_{i,j} for allocating an echo j to a track i is performed.

The method thus allows a simple and fast plausibility test of echo-track-allocations.

According to the invention a hard decision may be made whether an echo can be allocated to a respective track, or not, based on the "polarity" of the echo.

Known amplitude gates with a width of for example +/- 10 mV may allow an (erroneous) allocation of an echo having -2 mV to a track having +5 mV. According to an aspect of the invention, such an allocation would be prevented, irrespective of the width of any amplitude gate.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. Filling level measuring device for measuring a fill level, the filling level measuring device comprising:
a signal generation unit designed for generating and transmitting a transmission signal towards the fill medium;
a signal acquisition and processing unit designed for acquisition of an echo curve corresponding to a reflected part of the transmission signal;
wherein the signal acquisition and processing unit is further designed to carry out the steps of:
identifying at least one echo of the echo curve;
determining a relative sign of an amplitude value of the echo in relation to a corresponding relative amplitude value of the transmission signal or determining a relative phase of the echo in relation to a corresponding phase of the transmission signal;
allocating the echo to a first echo track which is related to previous echoes of previously acquired echo curves, if an amplitude value of a first echo of the previous echoes of the first echo track has the same sign as the amplitude value of the echo of the echo curve, or if a relative phase value of the first echo is identical to the relative phase value of the echo;
preventing allocation of the echo to the first echo track, if the amplitude value of the first echo of the previous echoes of the first echo track has a different sign as the amplitude value of the echo, or if the relative phase value of the first echo is not identical to the relative phase value of the echo.

2. Filling level measuring device of claim 1,
wherein determining the relative sign of the amplitude value of the echo comprises comparing the mean amplitude of the echo with a predefined reference value.

3. Filling level measuring device of claim 1,
wherein determining the relative sign of the amplitude value of the echo comprises comparing the echo with a predefined reference curve.

4. Filling level measuring device of claim 1,
wherein determining the relative phase of the echo comprises applying a correlation calculation.

5. Filling level measuring device of claim 1 or 4,
wherein determining the relative phase of the echo comprises applying a trigonometric calculation.

6. Filling level measuring device of claim 3,
wherein the reference curve is represented by a constant value.

7. Filling level measuring device of claim 3,
wherein the reference curve is acquired by filtering a previously or currently acquired echo curve.

8. Filling level measuring device of one of the preceding claims,
wherein the signal acquisition and processing unit is further designed to carry out the step of:
allocating the echo to a different, second track if the relative amplitude value of the first echo of the previous echoes of the first echo track has a different sign as the relative amplitude value of the echo, or if the relative phase value of the first echo is not identical to the relative phase value of the echo.

9. Filling level measuring device of one of the preceding claims,
adapted as a filling level radar.

10. Filling level measuring device of one of claims 1 to 7,
adapted as an ultrasound filling level measuring device.

11. Filling level measuring device of one of claims 1 to 7,
adapted for using guided microwaves for measuring the filling level.

12. Method of measuring a fill level of a fill medium, the method comprising the steps of:
generating and transmitting a transmission signal towards the fill medium;
acquiring of an echo curve corresponding to a reflected part of the transmission signal;
identifying at least one echo of the echo curve;
determining a sign of an amplitude value of the echo in relation to a corresponding amplitude value of the transmission signal or determining a relative phase of the echo in relation to a corresponding phase of the transmission signal;
allocating the echo to a first echo track which is related to previous echoes of previously acquired echo curves, if an amplitude value of a first echo of the previous echoes of the first echo track has the same sign as the amplitude value of the echo of the echo curve;
preventing allocation of the echo to the first echo track, if the amplitude value of the first echo of the previous echoes of the first echo track has a different sign as the amplitude value of the echo, or if the relative phase value of the first echo is not identical to the relative phase value of the echo.

13. Program element, which, when being executed on a processor of a filling level measurement device instructs the device to carry out the steps of:
generating and transmitting a transmission signal towards the fill medium;
acquiring of an echo curve corresponding to a reflected part of the transmission signal;
identifying at least one echo of the echo curve;
determining a sign of an amplitude value of the echo in relation to a corresponding amplitude value of the transmission signal or determining a relative phase of the echo in relation to a corresponding phase of the transmission signal;
allocating the echo to a first echo track which is related to previous echoes of previously acquired echo curves, if an amplitude value of a first echo of the previous echoes of the first echo track has the same sign as the amplitude value of the echo of the echo curve;
preventing allocation of the echo to the first echo track, if the amplitude value of the first echo of the previous echoes of the first echo track has a different sign as the amplitude value of the echo, or if the relative phase value of the first echo is not identical to the relative phase value of the echo.

14. Computer-readable medium, which comprises a computer program, which, when being executed on a processor of a filling level measurement device instructs the device to carry out the steps of:
generating and transmitting a transmission signal towards the fill medium;
acquiring of an echo curve corresponding to a reflected part of the transmission signal;
identifying at least one echo of the echo curve;
determining a sign of an amplitude value of the echo in relation to a corresponding amplitude value of the transmission signal or determining a relative phase of the echo in relation to a corresponding phase of the transmission signal;
allocating the echo to a first echo track which is related to previous echoes of previously acquired echo curves, if an amplitude value of a first echo of the previous echoes of the first echo track has the same sign as the amplitude value of the echo of the echo curve;
preventing allocation of the echo to the first echo track, if the amplitude value of the first echo of the previous echoes of the first echo track has a different sign as the amplitude value of the echo, or if the relative phase value of the first echo is not identical to the relative phase value of the echo.

## Patentansprüche

1. Füllstandsmessvorrichtung zum Messen eines Füllstands, das Füllstandsmessvorrichtung aufweisend:
eine Signalerzeugungseinheit, welche zum Erzeugen und Übertragen eines Übertragungssignals zu dem Füllmediums ausgelegt ist;
eine Signalerfassungs- und -verarbeitungseinheit, welche zum Erfassen einer Echokurve ausgelegt ist, die einem reflektierten Teil des Übertragungssignals entspricht;
wobei die Signalerfassungs- und -verarbeitungseinheit ferner ausgelegt zum Ausführen der Schritte von:
Identifizieren zumindest eines Echos der Echokurve;
Bestimmen eines relativen Vorzeichens von einem Amplitudenwert von dem Echo in Relation zu einem entsprechenden relativen Amplitudenwert von dem Übertragungssignal oder Bestimmen einer relativen Phase von dem Echo in Relation zu einer entsprechenden Phase von dem Übertragungssignal;
Zuordnen des Echos zu einer ersten Echospur, welche sich auf vorherige Echos zuvor erfasster Echokurven bezieht, wenn ein Amplitudenwert eines ersten Echos der vorherigen Echos der ersten Echospur dasselbe Vorzeichen wie der Amplitudenwert des Echos der Echokurve hat, oder wenn ein relativer Phasenwert von dem ersten Echo mit dem relativen Phasenwert von dem Echo identisch ist;
Verhindern von Zuordnung von dem Echo zu der ersten Echospur, wenn der Amplitudenwert von dem ersten Echo der vorherigen Echos der ersten Echospur ein anderes Vorzeichen als der Amplitudenwert von dem Echo hat, oder wenn der relative Phasenwert von dem ersten Echo nicht identisch zu dem relativen Phasenwert von dem Echo ist.

2. Füllstandsmessvorrichtung nach Anspruch 1,
wobei Bestimmen des relativen Vorzeichens des Amplitudenwerts von dem Echo Vergleichen der mittleren Amplitude von dem Echo mit einem vordefinierten Referenzwert aufweist.

3. Füllstandsmessvorrichtung nach Anspruch 1,
wobei Bestimmen des relativen Vorzeichens des Amplitudenwerts von dem Echo Vergleichen des Echos mit einer vordefinierten Referenzkurve aufweist.

4. Füllstandsmessvorrichtung nach Anspruch 1,
wobei Bestimmen der relativen Phase von dem Echo Anwenden einer Korrelationsrechnung aufweist.

5. Füllstandsmessvorrichtung nach Anspruch 1 oder 4,
wobei Bestimmen der relativen Phase von dem Echo Anwenden einer trigonometrischen Berechnung aufweist.

6. Füllstandsmessvorrichtung nach Anspruch 3,
wobei die Referenzkurve durch einen konstanten Wert repräsentiert wird.

7. Füllstandsmessvorrichtung nach Anspruch 3,
wobei die Referenzkurve durch Filtern einer zuvor oder aktuell erfassten Echokurve erfasst wird.

8. Füllstandsmessvorrichtung nach einem der vorherigen Ansprüche,
wobei die Signalerfassungs- und -verarbeitungseinheit ferner ausgelegt ist zum Ausführen der Schritte von:
Zuordnen des Echos zu einer anderen zweiten Spur, wenn der relative Amplitudenwert von dem ersten Echo von den vorherigen Echos der ersten Echospur ein anderes Vorzeichen hat als der relative Amplitudenwert von dem Echo oder wenn der relative Phasenwert des ersten Echos nicht identisch mit dem relativen Phasenwert des Echos ist.

9. Füllstandsmessvorrichtung nach einem der vorherigen Ansprüche,
adaptiert als ein Füllstandsradar.

10. Füllstandsmessvorrichtung nach einem der Ansprüche 1 bis 7,
adaptiert als ein Ultraschall-Füllstandsmessvorrichtung.

11. Füllstandsmessvorrichtung nach einem der Ansprüche 1 bis 7,
adaptiert zum Verwenden von geführten Mikrowellen zum Messen des Füllstands.

12. Verfahren zum Messen eines Füllstands von einem Füllmedium, das Verfahren aufweisend die Schritte von:
Generieren und Übertragen eines Übertragungssignals zu dem Füllmedium;
Erfassen von einer Echokurve, die einem reflektierten Teil des Sendesignals entspricht;
Identifizieren zumindest eines Echos von der Echokurve;
Bestimmen eines Vorzeichens eines Amplitudenwerts von dem Echo in Relation zu einem entsprechenden Amplitudenwert von dem Übertragungssignal oder Bestimmen einer relativen Phase von dem Echo in Relation zu einer entsprechenden Phase des Übertragungssignals;
Zuordnen des Echos zu einer ersten Echospur, welche sich auf vorherige Echos zuvor erfasster Echokurven bezieht, wenn ein Amplitudenwert von einem ersten Echo von den vorherigen Echos der ersten Echospur dasselbe Vorzeichen wie der Amplitudenwert von dem Echo der Echokurve hat,
Verhindern von Zuordnung von dem Echo zu der ersten Echospur, wenn der Amplitudenwert von dem ersten Echo der vorherigen Echos der ersten Echospur ein anderes Vorzeichen als der Amplitudenwert von dem Echo hat, oder wenn der relative Phasenwert von dem ersten Echo nicht identisch zu dem relativen Phasenwert von dem Echo ist.

13. Programmelement, welches, wenn dieses auf einem Prozessor einer Füllstandsmessvorrichtung ausgeführt wird, die Vorrichtung instruiert zum Ausführen der Schritte von:
Generieren und Übertragen eines Übertragungssignals zu dem Füllmedium;
Erfassen von einer Echokurve, die einem reflektierten Teil von dem Übertragungssignals entspricht;
Identifizieren zumindest eines Echos von der Echokurve;
Bestimmen eines Vorzeichens von einem Amplitudenwert von dem Echo in Relation zu einem entsprechenden Amplitudenwert von dem Übertragungssignal oder Bestimmen einer relativen Phase von dem Echo in Relation zu einer entsprechenden Phase von dem Übertragungssignal;
Zuordnen des Echos zu einer ersten Echospur, welcher sich auf vorherige Echos zuvor erfasster Echokurven bezieht, wenn ein Amplitudenwert von einem ersten Echo der vorherigen Echos der ersten Echospur dasselbe Vorzeichen hat wie der Amplitudenwert von dem Echo der Echokurve;
Verhindern von Zuordnung von dem Echo zu der ersten Echospur, wenn der Amplitudenwert von dem ersten Echo der vorherigen Echos der ersten Echospur ein anderes Vorzeichen als der Amplitudenwert von dem Echo hat, oder wenn der relative Phasenwert von dem ersten Echo nicht identisch zu dem relativen Phasenwert von dem Echo ist.

14. Computerlesbares Medium, welches ein Computerprogramm aufweist, welches, wenn es auf einem Prozessor einer Füllstandsmessvorrichtung ausgeführt wird, die Vorrichtung instruiert zum Ausführen der Schritte von:
Generieren und Übertragen eines Übertragungssignals zu dem Füllmedium;
Erfassen von einer Echokurve, die einem reflektierten Teil des Sendesignals entspricht;
Identifizieren zumindest eines Echos von der Echokurve;
Bestimmen eines Vorzeichens von einem Amplitudenwert von dem Echo in Relation zu einen entsprechenden Amplitudenwert von dem Übertragungssignal oder Bestimmen einer relativen Phase von dem Echo in Relation zu einer entsprechenden Phase des Übertragungssignals;
Zuordnen des Echos zu einer ersten Echospur, welche sich auf vorherige Echos zuvor erfasster Echokurven bezieht, wenn ein Amplitudenwert von einem ersten Echo der vorherigen Echos der ersten Echospur dasselbe Vorzeichen hat wie der Amplitudenwert des Echos der Echokurve;
Verhindern von Zuordnung von dem Echo zu der ersten Echospur, wenn der Amplitudenwert von dem ersten Echo der vorherigen Echos der ersten Echospur ein anderes Vorzeichen als der Amplitudenwert von dem Echo hat, oder wenn der relative Phasenwert von dem ersten Echo nicht identisch zu dem relativen Phasenwert von dem Echo ist.

## Revendications

1. Dispositif de mesure de niveau de remplissage pour mesurer un niveau de remplissage, le dispositif de mesure de niveau de remplissage comprenant :
une unité de génération de signal conçue pour générer et transmettre un signal de transmission vers le milieu de remplissage ;
une unité d'acquisition et de traitement de signal conçue pour l'acquisition d'une courbe d'écho correspondant à une partie réfléchie du signal de transmission ;
dans lequel l'unité d'acquisition et de traitement de signal est en outre conçue pour réaliser les étapes consistant à :
identifier au moins un écho de la courbe d'écho ;
déterminer un signe relatif d'une valeur d'amplitude de l'écho par rapport à une valeur d'amplitude relative correspondante du signal de transmission ou déterminer une phase relative de l'écho par rapport à une phase correspondante du signal de transmission ;
allouer l'écho à une première piste d'écho qui est liée à des échos précédents de courbes d'écho précédemment acquises, si une valeur d'amplitude d'un premier écho des échos précédents de la première piste d'écho a le même signe que la valeur d'amplitude de l'écho de la courbe d'écho, ou si une valeur de phase relative du premier écho est identique à la valeur de phase relative de l'écho ;
empêcher une allocation de l'écho à la première piste d'écho, si la valeur d'amplitude du premier écho des échos précédents de la première piste d'écho a un signe différent par rapport à la valeur d'amplitude de l'écho, ou si la valeur de phase relative du premier écho n'est pas identique à la valeur de phase relative de l'écho.

2. Dispositif de mesure de niveau de remplissage selon la revendication 1,
dans lequel la détermination du signe relatif de la valeur d'amplitude de l'écho comprend la comparaison de l'amplitude moyenne de l'écho à une valeur de référence prédéfinie.

3. Dispositif de mesure de niveau de remplissage selon la revendication 1,
dans lequel la détermination du signe relatif de la valeur d'amplitude de l'écho comprend la comparaison de l'écho à une courbe de référence prédéfinie.

4. Dispositif de mesure de niveau de remplissage selon la revendication 1,
dans lequel la détermination de la phase relative de l'écho comprend l'application d'un calcul de corrélation.

5. Dispositif de mesure de niveau de remplissage selon la revendication 1 ou 4,
dans lequel la détermination de la phase relative de l'écho comprend l'application d'un calcul trigonométrique.

6. Dispositif de mesure de niveau de remplissage selon la revendication 3,
dans lequel la courbe de référence est représentée par une valeur constante.

7. Dispositif de mesure de niveau de remplissage selon la revendication 3,
dans lequel la courbe de référence est acquise en filtrant une courbe d'écho précédemment ou actuellement acquise.

8. Dispositif de mesure de niveau de remplissage selon l'une des revendications précédentes,
dans lequel l'unité d'acquisition et de traitement de signal est en outre conçue pour réaliser l'étape consistant à :
allouer l'écho à une seconde piste différente si la valeur d'amplitude relative du premier écho des échos précédents de la première piste d'écho a un signe différent par rapport à la valeur d'amplitude relative de l'écho, ou si la valeur de phase relative du premier écho n'est pas identique à la valeur de phase relative de l'écho.

9. Dispositif de mesure de niveau de remplissage selon l'une des revendications précédentes,
adapté en tant que radar de niveau de remplissage.

10. Dispositif de mesure de niveau de remplissage selon l'une des revendications 1 à 7,
adapté en tant que dispositif de mesure de niveau de remplissage par ultrasons.

11. Dispositif de mesure de niveau de remplissage selon l'une des revendications 1 à 7,
adapté pour utiliser des micro-ondes guidées pour mesurer le niveau de remplissage.

12. Procédé de mesure d'un niveau de remplissage d'un milieu de remplissage, le procédé comprenant les étapes consistant à :
générer et transmettre un signal de transmission vers le milieu de remplissage ;
acquérir une courbe d'écho correspondant à une partie réfléchie du signal de transmission ;
identifier au moins un écho de la courbe d'écho ;
déterminer un signe d'une valeur d'amplitude de l'écho par rapport à une valeur d'amplitude correspondante du signal de transmission ou déterminer une phase relative de l'écho par rapport à une phase correspondante du signal de transmission ;
allouer l'écho à une première piste d'écho qui est liée à des échos précédents de courbes d'écho précédemment acquises, si une valeur d'amplitude d'un premier écho des échos précédents de la première piste d'écho a le même signe que la valeur d'amplitude de l'écho de la courbe d'écho ;
empêcher une allocation de l'écho à la première piste d'écho, si la valeur d'amplitude du premier écho des échos précédents de la première piste d'écho a un signe différent par rapport à la valeur d'amplitude de l'écho, ou si la valeur de phase relative du premier écho n'est pas identique à la valeur de phase relative de l'écho.

13. Élément de programme qui, lorsqu'il est exécuté sur un processeur d'un dispositif de mesure de niveau de remplissage, donne l'instruction au dispositif de réaliser les étapes consistant à :
générer et transmettre un signal de transmission vers le milieu de remplissage ;
acquérir une courbe d'écho correspondant à une partie réfléchie du signal de transmission ;
identifier au moins un écho de la courbe d'écho ;
déterminer un signe d'une valeur d'amplitude de l'écho par rapport à une valeur d'amplitude correspondante du signal de transmission ou déterminer une phase relative de l'écho par rapport à une phase correspondante du signal de transmission ;
allouer l'écho à une première piste d'écho qui est liée à des échos précédents de courbes d'écho précédemment acquises, si une valeur d'amplitude d'un premier écho des échos précédents de la première piste d'écho a le même signe que la valeur d'amplitude de l'écho de la courbe d'écho ;
empêcher une allocation de l'écho à la première piste d'écho, si la valeur d'amplitude du premier écho des échos précédents de la première piste d'écho a un signe différent par rapport à la valeur d'amplitude de l'écho, ou si la valeur de phase relative du premier écho n'est pas identique à la valeur de phase relative de l'écho.

14. Support lisible par ordinateur, qui comprend un programme d'ordinateur, qui, lorsqu'il est exécuté sur un processeur d'un dispositif de mesure de niveau de remplissage, donne l'instruction au dispositif de réaliser les étapes consistant à :
générer et transmettre un signal de transmission vers le milieu de remplissage ;
acquérir une courbe d'écho correspondant à une partie réfléchie du signal de transmission ;
identifier au moins un écho de la courbe d'écho ;
déterminer un signe d'une valeur d'amplitude de l'écho par rapport à une valeur d'amplitude correspondante du signal de transmission ou déterminer une phase relative de l'écho par rapport à une phase correspondante du signal de transmission ;
allouer l'écho à une première piste d'écho qui est liée à des échos précédents de courbes d'écho précédemment acquises, si une valeur d'amplitude d'un premier écho des échos précédents de la première piste d'écho a le même signe que la valeur d'amplitude de l'écho de la courbe d'écho ;
empêcher une allocation de l'écho à la première piste d'écho, si la valeur d'amplitude du premier écho des échos précédents de la première piste d'écho a un signe différent par rapport à la valeur d'amplitude de l'écho, ou si la valeur de phase relative du premier écho n'est pas identique à la valeur de phase relative de l'écho.
